# EUROPEAN PATENT APPLICATION

(11) **EP 0 777 371 A1**
(43) Date of publication of application: **04.06.1997**
(21) Application number: 96111069.9
(22) Date of filing: 10.07.1996
(51) Int. Cl.: H04M 1/05, A45F 5/02

(54) **A portable cellular telephone jacket holder**

(30) Priority: 10.08.1995 IT TO950189
(71) Applicant: Bugane', Primo, 10091 Apignano (IT)
(72) Inventor: Bugane, Primo, 10091 Alpignano (TO) (IT)
(74) Representative: Di Francesco, Gianni

(57) **Abstract**

In a portable cellular telephone jacket holder, a hooking seat (12) for suspending the jacket is suspended and laced to the trouser belt (15) by an upper strap (10). The hooking seat (12) is rotatable (21) for rotating the telephone in a plurality of positions about an axis substantially perpendicular to the thigh. Preferably, a lower lace (20) keeps the jacket adherent to the thigh of the owner.

## Description

The present invention refers to a portable cellular telephone jacket holder.

There are known jackets for portable cellular telephones having a loop or another means for hooking to the trouser belt. These kinds of jackets are especially useful in summer when wearing light clothes having no large pockets in which a portable cellular telephone can be fitted. The portable cellular telephone so hangs on the hip or the abdomen. This position may turn out uncomfortable in accomplishing some movements. Moreover, the present system for hooking to the belt provides for a single, fixed position without the possibility of temporarily moving the portable cellular telephone in a more safe and comfortable location.

A main object of the present invention is to provide an improved portable cellular telephone jacket holder capable of overcoming the above cited drawbacks, particularly to let the person carrying the portable cellular telephone have the maximum freedom of movement.

A further object of the invention is to provide a portable cellular telephone jacket holder which allows, where required, to move the portable cellular telephone to a more safe and comfortable position.

These and further objects which will be more apparent hereinafter are attained according to the present invention by the provision of a portable cellular telephone jacket holder as claimed in claim 1.

For the understanding of the present invention, reference is made to the following detailed description of an exemplary embodiment considered in combination with the accompanying drawings in which:
- FIG. 1: is a schematic overall view of a preferred embodiment of the portable cellular telephone jacket holder of the present invention;
- FIG. 2: shows a detail of the back of the jacket holder of FIG. 1.

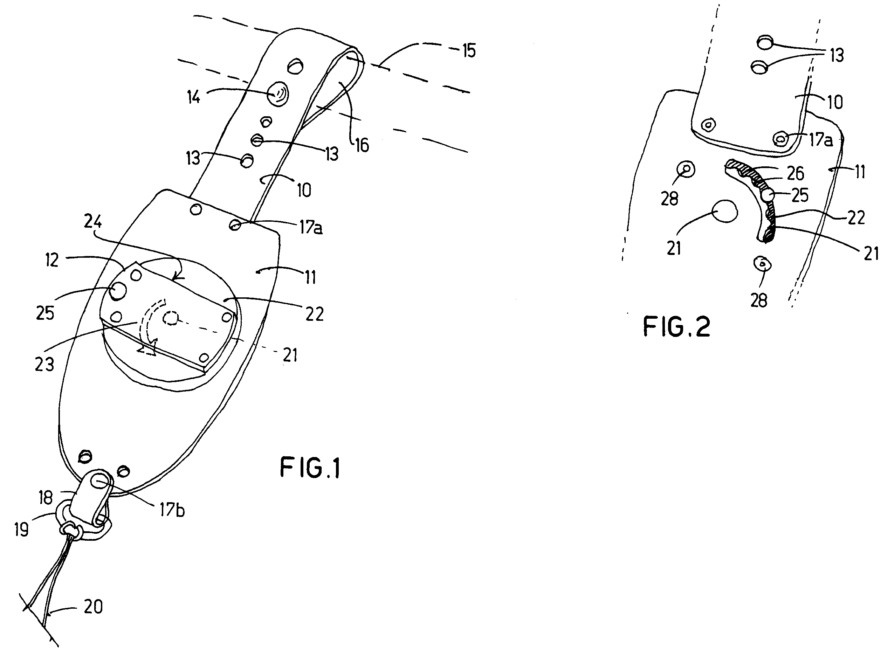

With reference at first to FIG. 1, portable cellular telephone jacket holder of the present invention comprises an upper strap member 10 attached to a flat member 11. Mounted to flat member 11 is a rotatable seat for hooking the jacket of a portable cellular telephone (not shown for simplicity).

Preferably, the strap 10, the flat member 11 and the rotatable hooking seat 12 are made of leather or another material having leather consistence, in other words being flexible and strong.

The upper strap 10 has a number of aligned holes 13 for selectively hooking a button 14 fixed to the upper end portion of the strap. As shown in FIG. 1, the button 14 is fitted in a chosen one of the holes 13, so forming a loop 16 in which the trouser belt (schematically depicted at 15) can be inserted for hooking the portable cellular telephone. The selected hole 13 for securing the button 14 determines the length of the telephone holder, which should be adjusted according to the stature of the telephone owner.

Flat member 11 is attached, preferably by means of upper and lower rivets 17a, 17b to the upper strap 10 and a lower loop 18, respectively. Loop 18 accommodates a ring 19 through which a lace 20 passes for tying around the leg of the person and so keep the portable cellular telephone adherent to the thigh in a stable condition and in an ideal position as to practicalness and accessibility.

Still in accordance with the present invention, as shown also in the detail of FIG. 2, in order to rotate the portable cellular telephone to an angular position, the hooking seat 12 is comprised of a rotatable plate 22, preferably made of leather or another similar material. Rotatable plate 22 is centrally pivotally mounted to flat member 11 at 21. Fixed to rotatable plate 22 is a transverse strap 23 adapted to form a pocket 24 in which slipping the hooking member (a hook or a loop, not shown) of the jacket of the portable cellular telephone.

The positions of rotatable plate 22 can be kept stable as there is provided a pin 25 (FIG. 2) which is releasably secured in one of a plurality of retaining recesses 26 determined by a toothed wheel or sector 27 fixed to the flat member 11 for example by means of rivets 28.

It is to be understood that the embodiment described above is merely exemplary and that persons skilled in the art may make many modifications without departing from the spirit and scope of the invention. All such modifications and variations are intended to be included within the scope of the invention as defined by the appended claims.

## Claims

1. A portable cellular telephone jacket holder characterised by comprising a hooking seat (12) for suspending the jacket of a portable cellular telephone, said seat (12) being suspended and laced to the trouser belt (15) by at least one upper suspension and lacing element (10), said hooking seat (12) being rotatable (21) for rotating the telephone in a plurality of positions about an axis substantially perpendicular to the thigh.

2. A portable cellular telephone jacket holder as set forth in claim 1, characterised by being provided with a lower binding means (20) for keeping it adherent to the thigh of the person carrying the portable cellular telephone.

3. A portable cellular telephone jacket holder as set forth in claim 2, characterised in that said binding means (20) consists of a lace to be tied around the thigh.

4. A portable cellular telephone jacket holder as set forth in claim 1, characterised in that the hooking seat (12) is rotatably mounted to a substantially flat support member (11), said support member being connected to said upper suspension and lacing element (10) and said lower binding means (20).

5. A portable cellular telephone jacket holder as set forth in claim 1, characterised in that said hooking seat (12) is provided with means (25, 26, 27) for retaining the telephone in one of said plurality of positions.

6. A portable cellular telephone jacket holder as set forth in claim 1, characterised in that said upper element (10) for suspending and lacing to the trouser belt is provided with length adjusting means (13, 14).

7. A portable cellular telephone jacket holder as set forth in claim 1, characterised in being made of leather or a material similar to leather.
